# EUROPÄISCHE PATENTSCHRIFT

(11) **EP 0 640 506 B1**
(45) Veröffentlichungstag und Bekanntmachung des Hinweises auf die Patenterteilung: **12.11.1997**
(21) Anmeldenummer: 94113423.1
(22) Anmeldetag: 27.08.1994
(51) Int. Cl.: B60J 7/00, F24F 13/12

(54) **Fahrzeugdach mit Glasdeckel und Sonnenblende**
Vehicle roof provided with a glaspanel and sunvisor
Toit de véhicule pourvu d'un panneau vitré et paresoleil

(30) Priorität: 31.08.1993 DE 4329285
(43) Veröffentlichungstag der Anmeldung: 01.03.1995
(73) Patentinhaber: Rockwell International GmbH, 60314 Frankfurt (DE)
(72) Erfinder: Hattas, Rainer, D-63584 Gründau (DE); Federmann, Dieter, D-63450 Hanau (DE)
(74) Vertreter: Oppermann, Ewald, Dipl.-Ing.

(56) Entgegenhaltungen:
- DE-U- 9 014 975
- GB-A- 887 183

## Beschreibung

Die Erfindung bezieht sich auf ein Fahrzeugdach gemäß dem Oberbegriff des Patentanspruchs 1.

Mit der Erfindung nach der nicht vorveröffentlichten DE-C-43 11 049 wird durch Ausbildung der Sonnenblende als Glasdeckelbeschichtung mit unmittelbar anliegender, den Lichtdurchtritt steuernder und am Deckelrahmen verschiebbar geführter dünner Verschlußplatte ein Fahrzeugdach erzielt, dessen Glasdeckel bei einfacher Ausbildung von sehr geringer Bauhöhe ist, so daß eine vorteilhafte vergrößerte Kopffreiheit im Fahrzeuginnenraum resultiert. Die in Reihen angeordneten und gleichmäßig beabstandeten Lichtdurchlässe der Sonnenblende sind in der bevorzugten Ausführungsform als Querschlitze gleicher Abmessungen ausgebildet und sind durch lichtundurchlässige Längs- und Querstege der Glasdeckelbeschichtung umgrenzt, wodurch eine gitterartige Sonnenblendenstruktur entsteht.

Die dünne Verschlußplatte ist bezüglich ihrer den Lichtdurchlässen der Sonnenblende entsprechenden Öffnungen, ihrer den Querstegen entsprechenden Verschlußabschnitte und ihrer den Längsstegen entsprechenden Flächenbereiche zwischen den Öffnungsreihen von mit der Sonnenblende deckungsgleicher gitterartiger Struktur. Dabei entspricht die Breite der Lichtdurchlässe und der Öffnungen der Breite der Querstege und der Verschlußabschnitte. Unter "Breite" werden für die Zwecke dieser Anmeldung Abmessungen in Schieberichtung der Verschlußplatte verstanden (diese Schieberichtung kann aber muß nicht mit der Schieberichtung des Glasdeckels bzw. der Fahrzeugmittelachse zusammenfallen).

Aufgrund dieser Ausbildung werden die Lichtdurchlässe der Sonnenblende vollständig von der Verschlußplatte freigegeben oder geschlossen, wenn die Verschlußplatte gegenüber der Sonnenblende in der gewünschten Richtung um eine Wegstrecke verschoben wird, die der übereinstimmenden Breite der Lichtdurchlässe, Öffnungen, Querstege und Verschlußabschnitte entspricht. Wegen dieser übereinstimmenden Breitenabmessungen ist die gesamte maximale Lichtdurchtrittsfläche des Glasdeckels auf etwa 50 % seiner dafür nutzbaren Flächengröße begrenzt, genauer gesagt, auf weniger als 50 % seiner Flächengröße, weil auch die Längsstege zwischen den Lichtdurchtrittsreihen für den Lichtdurchtritt nicht nutzbar sind. Im Ergebnis werden über 50 % der nutzbaren Glasscheibenfläche des Glasdeckels von der lichtundurchlässigen Glasdeckelbeschichtung abgedeckt, wodurch der maximal mögliche Lichteinfall begrenzt ist.

Der vorliegenden Erfindung liegt die Aufgabe zugrunde, das vorstehend angegebene Fahrzeugdach mit Glasdeckel und Sonnenblende unter Beibehaltung eines einfachen Aufbaus und der typischen geringen Bauhöhe dahingehend weiterauszubilden, daß die Sonnenblende eine maximale Lichtdurchtrittsfläche erhält, die größer ist, als die durch die Glasdeckelbeschichtung im nutzbaren Flächenbereich des Glasdeckels abgedeckte, lichtundurchlässige Fläche.

Die gestellte Aufgabe wird durch die Merkmale des kennzeichnenden Teils des Patentanspruchs 1 gelöst. Vorteilhafte Weiterbildungen der Erfindung sind in den Unteransprüchen angegeben und nachstehend ebenfalls erläutert.

Nach dem Lösungsgedanken der vorliegenden Erfindung sind die Lichtdurchlässe der Sonnenblende um ein Mehrfaches breiter als die dazwischen befindlichen, mit den Verschlußabschnitten der Verschlußplatte übereinstimmenden Querstege. Damit diese verbreiterten Lichtdurchlässe dennoch vollständig von der Verschlußplatte abgedeckt werden können, ist die Verschlußplatte aus mehreren dünnen, eng aneinanderliegenden Schichten aufgebaut, die schrittweise zueinander verschoben werden können, wobei die Summe der Breiten der Verschlußabschnitte der einzelnen Schichten der Breite der Lichtdurchlässe entspricht. In Verfolg des Erfindungsgedankens entspricht das erwähnte Mehrfache der Breite zahlenmäßig der Anzahl der Verschlußplattenschichten. Bei der bevorzugten Zahl von drei Verschlußplattenschichten sind daher die Lichtdurchlässe der Sonnenblende und die damit übereinstimmenden Öffnungen der Verschlußplattenschichten dreimal so breit wie die lichtundurchlässigen Querstege zwischen den Lichtdurchlässen der Sonnenblende und die damit übereinstimmenden Verschlußabschnitte der Verschlußplattenschichten. Wenn die Lichtdurchlässe der Sonnenblende mit den Öffnungen der Verschlußplattenschichten vollständig fluchten, wird am Glasdeckel eine maximale Lichteinfall- bzw. Lichtdurchtrittsfläche freigegeben, die wesentlich größer ist, als die durch die Gitterstruktur der Sonnenblende und der mehrschichtigen Verschlußplatte abgedeckte lichtundurchlässige Fläche.

Wie im Anspruch 2 angegeben, ist der Deckelrahmen vorteilhaft zweiteilig ausgebildet, mit einem die Glasscheibe einfassenden und haltenden oberen Rahmenteil und einem damit festverbindbaren unteren Rahmenteil. Dabei ist die Anordnung so getroffen, daß der Abstand zwischen dem unteren Rahmenteil und der Unterfläche der Glasscheibe bzw. der Sonnenblende etwa der Packungsdicke der mehrschichtigen Verschlußplatte entspricht.

Für ein schrittweises Verschieben der einzelnen Verschlußplattenschichten ist die Anordnung vorteilhaft so getroffen, wie es im Anspruch 3 angegeben ist. Diese Anordnung stellt sicher, daß die einzelnen Schichten nacheinander verschoben werden, wobei die jeweilige Schiebewegstrecke etwa der Breite der Verschlußabschnitte bzw. der damit übereinstimmenden Breite der Querstege der Sonnenblende entspricht.

Für das schrittweise Verschieben der Verschlußplattenschichten ist der Einsatz der in Anspruch 4 angegebenen Antriebsvorrichtung von Vorteil. Durch Drehen eines Handgriffs werden die Verschlußplattenschichten nacheinander um die angegebene Wegstrecke verschoben. Die Verschiebung der einzelnen Verschlußplattenschichten kann an der Antriebsvorrichtung aber auch an den einzelnen Schichten durch geeignete Mittel indexiert sein. Die Besonderheit des Verschiebungsantriebs besteht darin, daß die zuerst bewegte Verschlußplattenschicht über den vollen der Breite der Lichtdurchlässe entsprechenden Weg verschoben wird, während die nachfolgend verschobenen Schichten mit abnehmender Tendenz jeweils nur einen Teil dieser Wegstrecke zurücklegen, weil ihre Schiebemitnahme erst nach und nach erfolgt. Bei den bevorzugten drei Verschlußplattenschichten legt die zuerst verschobene Schicht den vollen Weg zurück, die mittlere Schicht zwei Drittel des Weges und die zuletzt bewegte Schicht nur ein Drittel des Weges.

Die maximale Öffnung und die Schließstellung der Sonnenblende sind durch die im Anspruch 5 angegebenen Anschläge begrenzt.

Ein Ausführungsbeispiel der Erfindung wird nachfolgend anhand der Zeichnungen näher erläutert. Darin zeigt:
- Fig. 1: die Draufsicht auf den Glasdeckel eines Fahrzeugdachs, mit vollständig geöffneten, großflächig dimensionierten Lichtdurchlässen der Sonnenblende,
- Fig. 2: den Längsschnitt durch den Glasdeckel entsprechend der Linie II-II in Fig. 1,
- Fig. 3: die abgebrochene gegenüber Fig. 1 vergrößerte Draufsicht auf den die Antriebsvorrichtung aufweisenden Bereich des Glasdeckels,
- Fig. 4: die der Fig. 1 entsprechende Draufsicht, jedoch mit zu einem Drittel geschlossenen Lichtdurchlässen,
- Fig. 5: den Längsschnitt durch den Glasdeckel entsprechend dem Linie V-V in Fig. 4,
- Fig. 6: die abgebrochene gegenüber Fig. 4 vergrößerte Draufsicht auf den die Antriebsvorrichtung aufweisenden Bereich des Glasdeckels,
- Fig. 7: die den Fig. 1 und 4 entsprechende Draufsicht, jedoch mit zu zwei Drittel geschlossenen Lichtdurchlässen,
- Fig. 8: den Längsschnitt durch den Glasdeckel entsprechend der Linie VIII-VIII in Fig. 7,
- Fig. 9: die abgebrochene gegenüber Fig. 7 vergrösserte Draufsicht auf den die Antriebsvorrichtung aufweisenden Bereich des Glasdeckels,
- Fig. 10: die den Fig. 1, 4 und 7 entsprechende Draufsicht, jedoch mit vollständig geschlossenen Lichtdurchlässen,
- Fig. 11: den Längsschnitt durch den Glasdeckel entsprechend der Linie XI-XI in Fig. 10,
- Fig. 12: die abgebrochene gegenüber Fig. 10 vergrößerte Draufsicht auf den die Antriebsvorrichtung aufweisenden Bereich des Glasdeckels,
- Fig. 13: den abgebrochenen Querschnitt durch den Glasdeckel entsprechend der Linie XIII-XIII in Fig. 1 und
- Fig. 14-16: Draufsichten auf die einzelnen Schichten der dreischichtigen Verschlußplatte.

In den Zeichnungen veranschaulichen die Figurengruppen 1 bis 3, 4 bis 6, 7 bis 9 und 10 bis 12 die einzelnen Schrittphasen zwischen den vollständig geöffneten und den vollständig geschlossenen Positionen der Sonnenblende des Glasdeckels. Die Zeichnungen sind insoweit schematisch ausgeführt, als in allen Längsschnitt- und Querschnittsdarstellungen die Dickenmaße der im Schnitt dargestellten Elemente zur besseren Erkennbarkeit erheblich gegenüber den Draufsichtabmessungen dieser Elemente vergrößert dargestellt sind. Weiterhin sind nur vier Reihen von Lichtdurchlässen bzw. Öffnungen gezeichnet, die jeweils aus vier bzw. drei Lichtdurchlässen oder Öffnungen bestehen. Selbstverständlich kann die Zahl der Reihen und der darin befindlichen Lichtdurchlässe und Öffnungen auch größer oder kleiner sein.

In den Zeichnungen ist lediglich der Glasdeckel 1', nicht dagegen das übliche Konstruktionsumfeld eines Schiebedaches, Schiebehebedaches, Spoilerdaches oder Lüftungsklappendaches dargestellt. Der Glasdeckel 1' setzt sich zusammen aus einer Glasscheibe 2 (wobei unter diesem Begriff Scheiben aus jedem durchsichtigen Werkstoff verstanden werden) und einem die Glasscheibe 2' im Randbereich umfassenden und um den Deckel umlaufenden Deckelrahmen 4'. Der Deckelrahmen 4' kann abweichend von der gezeichneten Ausbildung aus einem oberen Abdeckrahmen, welcher den Rand der Glasscheibe überdeckt, und einem mit dem oberen Abdeckrahmen verschraubten Gegenrahmen bestehen. Bei der bevorzugten Ausführungsform ist jedoch der Deckelrahmen 4' aus einem oberen Rahmenteil 22, das durch Umspritzen oder Umschäumen der Glasscheibe 2 mit Kunststoff, beispielsweise mit Polyurethan, gebildet ist, und einem unteren Rahmenteil 23 zusammengesetzt, das bündig in das obere Rahmenteil 22 eingreift und mit diesem verschraubt sein kann. Am Außenumfang des oberen Rahmenteils 22 kann in üblicher Weise eine Randspaltabdichtung angebracht sein. Diejenigen Verbindungselemente, mit denen der Glasdeckel 1' an Stellelemente der Dachkonstruktion zu seiner Führung und Verstellung angeschlossen ist, sind zur Vereinfachung der Darstellung nicht gezeigt.

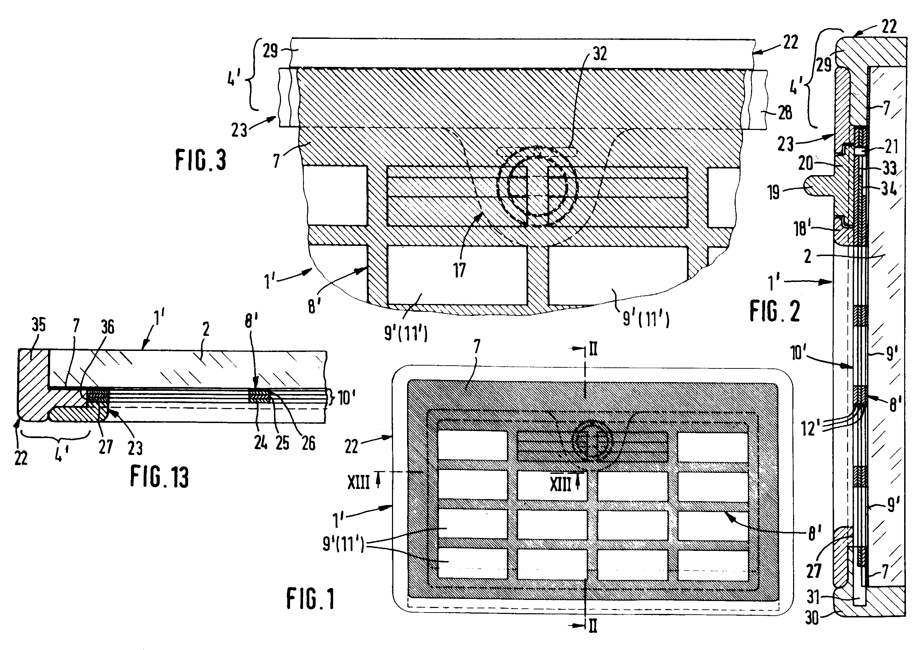

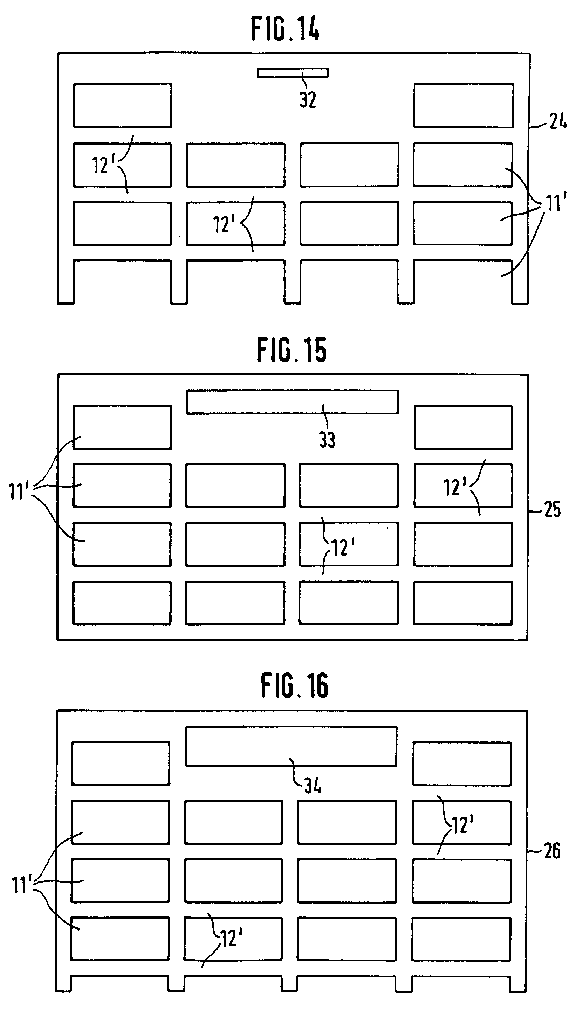

Die Glasscheibe 2 ist wie üblich mit einem randbündig umlaufenden und undurchsichtigen Dekorrahmen 7 gegen Einsichtnahme von oben versehen. Dieser Dekorrahmen 7 wird im Siebdruckverfahren auf die Unterfläche der Glasscheibe 2 vor dem Anbringen des oberen Rahmenteils 4 angebracht. Bei dem Siebdruckvorgang wird gleichzeitig und ebenfalls auf der Unterfläche der Glasscheibe 2 innerhalb der von dem Dekorrahmen 7 umgrenzten Fläche ein die Sonnenblende 8' bildendes Gitter aus ebenfalls lichtundurchlässigen, d.h. undurchsichtigen zusammenhängenden Flächen aufgedruckt. Aufgrund dieses gitterartigen Aufdrucks entsteht eine Sonnenblende 8' mit mehreren Reihen von in Fahrzeuglängsrichtung gleichmäßig beabstandeten Lichtdurchlässen 9', die in Form von Querschlitzen gleicher Abmessungen vorgesehen sind. Die Lichtdurchlässe 9' sind durch die Längs- und Querstege des aufgedruckten Gitters der Sonnenblende 8' umgrenzt. Auf diese Weise alternieren lichtundurchlässige mit lichtdurchlässigen Flächenbereichen der Glasscheibe 2 . Der Sonnenblende 8' bzw. der Glasscheibe 2 liegt von unten die mehrschichtige Verschlußplatte 10' unmittelbar an. Die noch näher zu beschreibenden Verschlußplattenschichten 24, 25 und 26 sind einzeln in den Fig. 14 bis 16 dargestellt. Ihre jeweilige Relativlage geht am besten aus den Längsschnittdarstellungen gemäß der Fig. 2, 5, 8 und 11 hervor. Wie die Sonnenblende 8' ist auch die Verschlußplatte 10', d.h. ihre Verschlußplattenschichten 24, 25 und 26 mit mehreren Reihen gleichmäßig beabstandeter Öffnungen 11' versehen, die in Anordnung und Abständen den Lichtdurchlässen 9' in der Sonnenblende 8' entsprechen. Alternierend mit den Öffnungen 11' sind Verschlußabschnitte 12' für die vollständige oder partielle Abdeckung der Lichtdurchlässe 9'. Die Verschlußabschnitte 12' sind durch die Querstege zwischen den Öffnungen 11' gebildet. Auf diese Weise wiederholt sich an der Verschlußplatte 10', d.h. ihren Verschlußplattenschichten 24, 25 und 26 das Gittermuster der Sonnenblende 8'.

Anstelle der in den Zeichnungen dargestellten schlitzförmigen Lichtdurchlässe 9' in der Sonnenblende 8' und der entsprechenden Öffnungen 11' in der Verschlußplatte 10' können die Lichtdurchlässe und Öffnungen auch eine geometrisch abweichende Lage und Gestalt aufweisen, wenn lediglich sichergestellt ist, daß durch Verschieben der einzelnen Schichten der Verschlußplatte 10' gegenüber der Sonnenblende eine vollständige Abdeckung aller Lichtdurchlässe in der Sonnenblende wie auch eine vollständige Freigabe dieser Lichtdurchlässe durch entsprechende Stegbereiche der mehrschichtigen Verschlußplatte 10' möglich ist.

Wesentlich für die Bemessung der Breite der Lichtdurchlässe 9' und der damit übereinstimmenden Öffnungen 11' sowie der Breite der zwischen den Lichtdurchlässen 9' befindlichen lichtundurchlässigen Stege der Sonnenblende 8' und der damit übereinstimmenden Verschlußabschnitte 12' ist es, daß die Breite der Lichtdurchlässe 9' und der Öffnungen 11' ein Mehrfaches der Breite der genannten Stege und Verschlußabschnitte 12' ist, wobei soviel Verschlußabschnitte 12' übereinander, d.h. soviele Verschlußplattenschichten übereinander vorgesehen sein müssen, daß die Summe der Breitenabmessungen der übereinander befindlichen Verschlußabschnitte 12' der Breite der Lichtdurchlässe 9' und der Öffnungen 11' entspricht. Andernfalls wäre eine vollständige Abdeckung der Lichtdurchlässe 9' in der Sonnenblende 8' nicht möglich.

Das obere Rahmenteil 22 des Deckelrahmens 4' weist an seinem vorderen Querteil 29, seinem hinteren Querteil 30 und seinen beiden Seitenteilen 35 einen im wesentlichen übereinstimmenden Querschnitt auf. Das untere Rahmenteil 23 ist paßgenau in das obere Rahmenteil 22 eingesetzt. Die Abmessungen und Profilierungen der beiden Rahmenteile sind so gewählt, daß am unteren Rahmenteil 23 eine ebene Auflagefläche 27 für die mehrschichtige Verschlußplatte 10' gebildet ist. Die ebene Auflagefläche 27 verläuft parallel und mit Abstand zur Unterfläche der Glasscheibe 2 bzw. der Sonnenblende 8', wobei dieser Abstand etwa der Gesamtdicke der mehrschichtigen Verschlußplatte 10' entspricht. Wie Fig. 13 verdeutlicht, sind die einzelnen Verschlußplattenschichten 24, 25 und 26 der Verschlußplatte 10' an der ihnen zugekehrten Innenfläche 36 des oberen Rahmenteils 22 verschiebbar geführt. Zur Aufnahme der hinteren Enden der Verschlußplattenschichten 24, 25 und 26 befindet sich im hinteren Querteil 30 des oberen Rahmenteils 22 eine Aufnahmenut 31. Die senkrechte Wandung der Aufnahmenut 31 bildet einen Schiebeanschlag für die Verschlußplattenschichten. Vorn dient eine senkrechte Fläche am Glasscheibenauflageschenkel des vorderen Querteils 29 des oberen Rahmenteils 22 als vordere Begrenzung der Schiebewege der Verschlußplattenschichten.

Die Verschlußplattenschichten 24, 25 und 26 bestehen aus dünnen Blechen oder Kunststoffolien und sind bezogen auf die Schieberichtung von gleicher Breite aber unterschiedlicher Länge. Diejenige Verschlußplattenschicht, die den längsten Schiebeweg zurücklegt, im gezeichneten Beispiel die untere Verschlußplattenschicht 24, hat die geringste Länge, während die Verschlußplattenschicht mit dem kürzesten Schiebeweg, im gezeichneten Beispiel die obere Verschlußplattenschicht 26, die größte Länge aufweist. Im vorderen mittleren Bereich der drei Verschlußplattenschichten 24, 25 und 26 befinden sich Schlitze 32, 33 und 34 unterschiedlicher Länge und Breite.Diese Schlitze dienen dem zu unterschiedlichen Zeitpunkten wirksamen Schiebeantrieb der Verschlußplattenschichten. Da die Verschlußplattenschichten aus dünnen Blechen oder Kunststoffolien bestehen, können sie sich der Unterseite der Sonnenblende 8' auch dann eng anlegen, wenn der Glasdeckel 1' in seiner Querrichtung zur Anpassung an eine Dachwölbung gewölbt sein sollte. In diesem Fall ist natürlich die Auflagefläche 27 am unteren Rahmenteil 23 nicht eben, sondern weist eine entsprechende Wölbung auf.

Wie am deutlichsten aus den Fig. 14 bis 16 hervorgeht, beginnen im gezeichneten Beispiel an allen Verschlußplattenschichten 24, 25 und 26 die vordersten Querreihen der Öffnungen 11' mit einem Abstandsmaß des zweifachen der Verschlußabschnitte 12' von den jeweiligen Vorderkanten der Verschlußplattenschichten. Der Abstand der Schlitze 32, 33 und 34 von den vorderen Kanten der Verschlußplattenschichten ist bei allen drei Schichten gleich dem Breitenmaß der Verschlußabschnitte 12'.

Im einzelnen sind die in den Verschlußplattenschichten 24, 25 und 26 vorgesehenen Durchbrüche wie folgt vorgesehen. Bei der unteren Verschlußplattenschicht 24 ist die Breite des Schlitzes 32 etwa dem Durchmesser eines Mitnehmerstiftes 21 der noch zu beschreibenden Antriebsvorrichtung 17 gleich. An der hinteren Querreihe der Öffnungen 11' sind diese Öffnungen nach hinten zu offen. Die Verschlußplattenschicht 24 endet daher hinten mit vorstehenden Längsstegen, deren Länge der dreifachen Breite der Verschlußabschnitte 12' entspricht. Diese Verschlußplattenschicht 24 besitzt daher die kürzeste Längenabmessung in Schieberichtung.

Bei der mittleren Verschlußplattenschicht 25 entspricht die Breite des Schlitzes 33 für den Eingriff des Mitnehmerstifts 21 etwa dem Durchmesser des Mitnehmerstifts zuzüglich der Breite eines Verschlußabschnitts 12'. Die hintere Seite dieser Verschlußplattenschicht 25 ist durch einen an die letzte Querreihe der Öffnungen 11 angrenzenden durchgehenden Quersteg gebildet. Dementsprechend ist die Längenabmessung der Verschlußplattenschicht 25 in Schieberichtung gegenüber der unteren Verschlußplattenschicht 24 um die Breite eines Verschlußabschnitts 12' länger.

In der oberen Verschlußplattenschicht 26 entspricht die Breite des Schlitzes 34 für den Eingriff des Mitnehmerstifts 21 etwa dem Durchmesser des Mitnehmerstifts zuzüglich dem zweifachen Maß der Breite eines Verschlußabschnitts 12'. Hinten endet die Verschlußplattenschicht 26 mit vorstehenden Längsstegen, deren Länge der Breite eines Verschlußabschnitts 12' entspricht. Die obere Verschlußplattenschicht 26 ist damit gegenüber der mittleren Verschlußplattenschicht 25 um das Maß einer und gegenüber der unteren Schicht 24 um das Maß zweier Breiten der Verschlußabschnitte 12' länger. Die Verschlußplattenschichten 24, 25 und 26 lassen sich nacheinander in Fahrzeuglängsrichtung jeweils um die Strecke verschieben, die zwischen ihren Vorderkanten, bzw. ihren Hinterkanten und dem jeweils benachbarten Anschlag vorhanden ist. Die Verschiebebewegung kann durch an den einzelnen Verschlußplattenschichten angebrachte Handhaben durch unmittelbaren Handangriff vorgenommen werden. Im bevorzugten Ausführungsbeispiel ist hierfür jedoch die Antriebsvorrichtung 17 vorgesehen, die aus einer Reihe von Figuren in unterschiedlicher Stellung ersichtlich ist. Die Antriebsvorrichtung ist am vorderen Querteil 28 des unteren Rahmenteils 23 angebracht. Sie besitzt eine drehbar, aber axial unverschiebbar in einem Gehäuse 18' gelagerte und mit einem nach unten weisenden Handgriff 19 versehene flache kreisrunde Antriebsscheibe 20. Diese trägt an ihrer Oberseite den exzentrisch angebrachten, nach oben vorstehenden Mitnehmerstift 21, welcher in alle Schlitze 32, 33 und 34 der Verschlußplattenschichten 24, 25 und 26 eingreift. Das ebenfalls flachbauende Gehäuse 18' ist im gezeigten Beispiel am vorderen Querteil 28 unmittelbar angeformt. Bei Drehungen der Antriebsscheibe 20 mittels des Handgriffs 19 bewegt sich der Mitnehmerstift 21 nach Art eines Kurbelzapfens auf einer kreisförmigen Bahn um die Mittelachse der Antriebsscheibe.

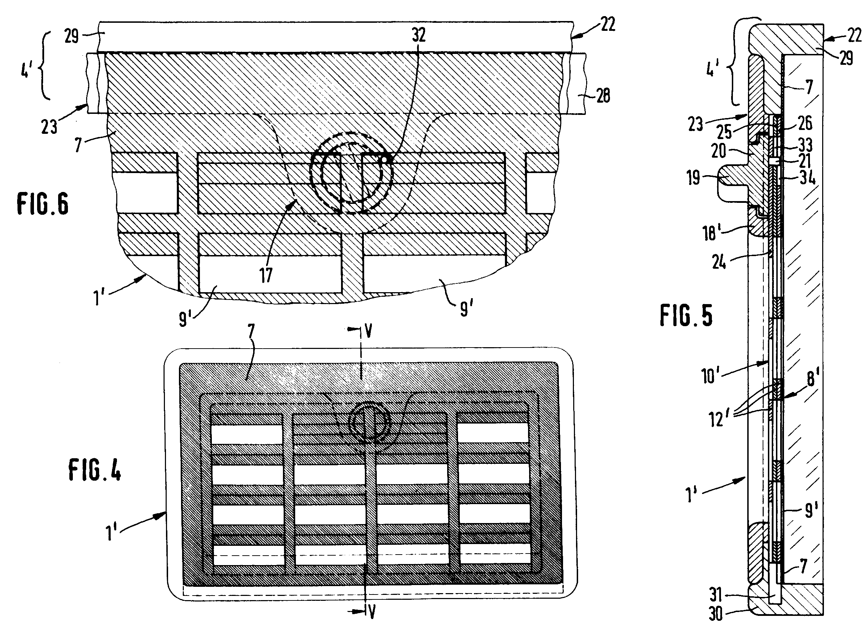

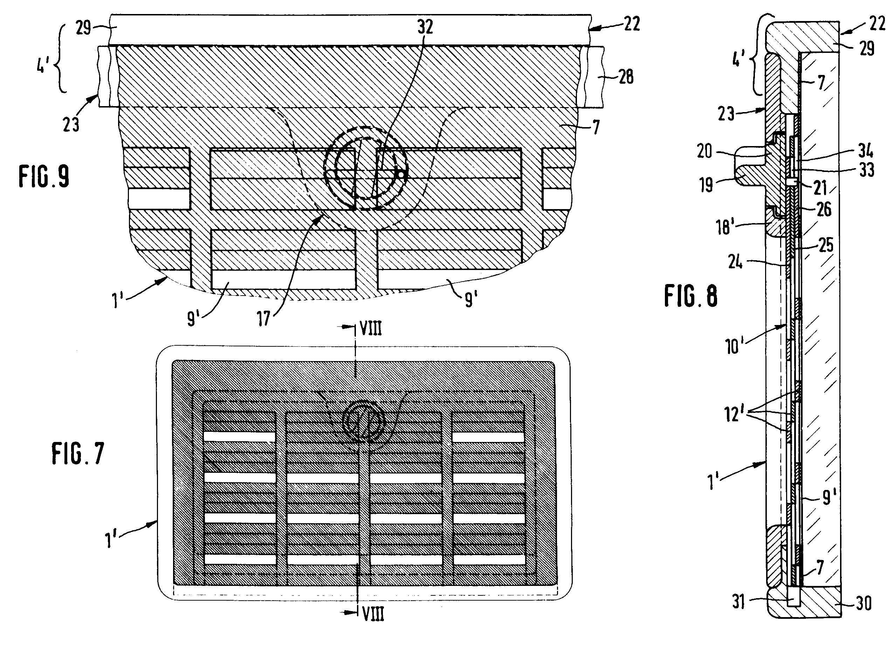

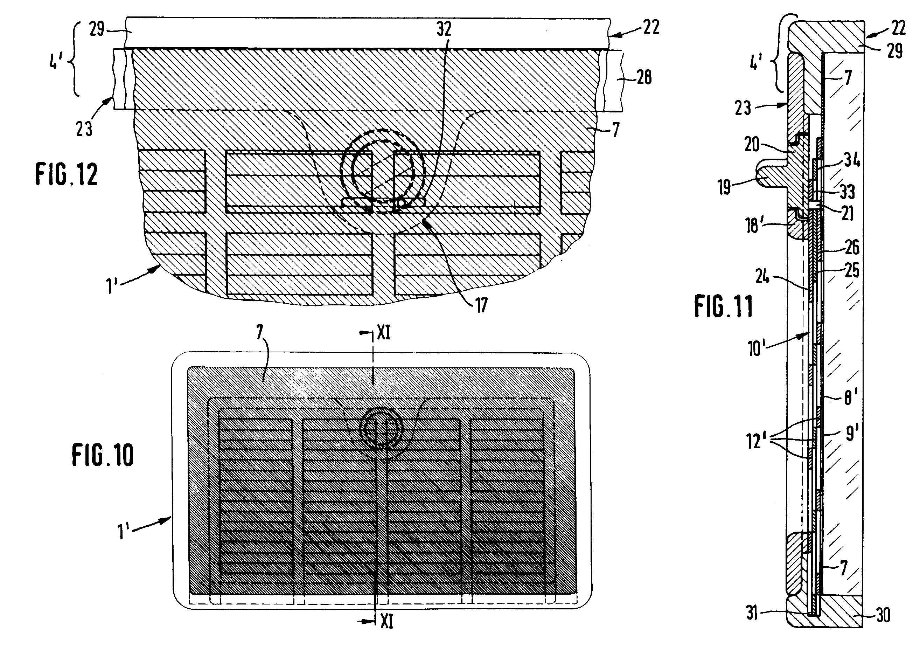

Bei Drehung der Antriebsscheibe 20 in Schließrichtung verschiebt der Mitnehmerstift 21 infolge seines Eingriffs in den Schlitz 32 ausgehend von der in den Fig. 1 bis 3 gezeigten Stellung die untere Verschlußplattenschicht 24 nach hinten, bis die in den Fig. 4 bis 6 gezeigte Stellung erreicht ist. In dieser Stellung schlägt der Mitnehmerstift an die Hinterkante des Schlitzes 33 an, so daß bei fortgesetzter Drehung die mittlere Verschlußplattenschicht 25 zusätzlich zu der unteren Verschlußplattenschicht 24 nach hinten verschoben wird, bis die in den Fig. 7 bis 9 gezeigte Stellung erreicht ist. In dieser Stellung schlägt der Mitnehmerstift 21 auch an die hintere Kante des Schlitzes 34 an, so daß bei fortgesetzter Drehung nunmehr zusätzlich zu den Verschlußplattenschichten 24 und 25 auch die obere Verschlußplattenschicht 26 nach hinten mitgenommen wird. Die Drehung der Antriebsscheibe 20 in Schließrichtung läßt sich fortsetzen, bis die in den Fig. 10 bis 12 gezeigte Stellung erreicht ist. Hierbei schlagen die Hinterkanten aller Verschlußplattenschichten 24, 25 und 26 an die senkrechte Wand der Aufnahmenut 31 an, wodurch der Schließvorgang der Sonnenblende beendet ist. Die Öffnung der Sonnenblende erfolgt in umgekehrter Drehrichtung der Antriebsscheibe 20, wobei die Verschlußplattenschichten analog zum Schließvorgang durch den Mitnehmerstift nach vorn bewegt werden. Hierbei wird wiederum zunächst die untere Verschlußplattenschicht 24 verschoben und die darüber befindlichen Verschlußplattenschichten werden jeweils mitgenommen, sobald der Mitnehmerstift 21 an die Vorderkanten der Schlitze 33 und 34 der Verschlußplattenschichten 25 und 26 anschlägt. Nach Abschluß des Öffnungsvorganges befinden sich die Vorderkanten der Verschlußplattenschichten 24, 25 und 26 an ihrer vorderen senkrechten Anschlagfläche des vorderen Querteils 29 des oberen Rahmenteils 22. Hierbei befinden sich die Verschlußabschnitte 12' der Verschlußplattenschichten ausgefluchtet übereinander, so daß die Lichtdurchlässe 9' der Sonnenblende 8' völlig freigelegt sind. Wegen der verhältnismäßig großflächigen Lichtdurchlässe 9' gelangt jetzt durch die Gitterstruktur der Sonnenblende 8' nur unwesentlich abgeschwächt Licht in den Fahrzeuginnenraum.

Die Anordnung einer mehrschichtigen Verschlußplatte 10' bietet nicht nur die Möglichkeit einer wesentlichen Vergrößerung der Lichtdurchlaßflächen, sondern gestattet auch eine gezielte Abdeckung oder Freilegung der Lichtdurchlässe 9'. Werden die einzelnen Verschlußplattenschichten schrittweise um jeweils die Breite eines Verschlußabschnitts 12' verschoben und der Schiebevorgang in der jeweils erreichten Stellung beendet, befinden sich nacheinander einzelne Verschlußabschnitte unterhalb der Lichtdurchlässe und decken diese ab, bzw. geben diese im Verhältnis des zurückgelegten Schiebewegs der verschobenen Verschlußplattenschichten frei. Selbstverständlich sind auch beliebige Zwischenstellungen möglich, so daß ein stufenloses Verschließen oder Freigeben der Lichtdurchlässe 9' erzielt wird.

## Patentansprüche

1. Fahrzeugdach mit einem Glasdeckel (1'), der eine Dachöffnung in einer Schließstellung ausfüllt, zur mindestens teilweisen Freigabe derselben verstellbar ist und mit einer als lichtundurchlässige Beschichtung der Unterfläche des Glasdeckels (1') ausgebildeten Sonnenblende (8') versehen ist, die mindestens eine Reihe von gleichmäßig beabstandeten Lichtdurchlässen (9') aufweist und der eine als Schieber ausgebildete Verschlußplatte (10') unmittelbar anliegend zugeordnet ist, die an einem Deckelrahmen (4') parallel zur Sonnenblende (8') verschiebbar geführt ist und mit Verschlußabschnitten (12') zum wahlweisen vollständigen oder teilweisen Verschließen oder Öffnen der Lichtdurchlässe (9') und damit alternierenden Öffnungen (11') versehen ist, die mit den entsprechenden Lichtdurchlässen (9') durch Verschieben der Verschlußplatte (10') wahlweise vollständig oder teilweise ausrichtbar sind, wobei die Breite der Öffnungen (11') mit der Breite der Lichtdurchlässe (9') und die Breite der Verschlußabschnitte (12') mit dem Abstand zwischen den Lichtdurchlässen (9') übereinstimmt, **dadurch gekennzeichnet, daß** die Breite der Lichtdurchlässe (9') der Sonnenblende (8') ein Mehrfaches der Breite der Verschlußabschnitte (12') der Verschlußplatte (10') beträgt, und daß die Verschlußplatte (10') aus einer dem vorgenannten Mehrfachen entsprechenden Anzahl von einzelnen dünnen Verschlußplattenschichten (24, 25, 26) besteht, die ohne Zwischenräume aneinanderliegen und zueinander verschiebbar sind.

2. Fahrzeugdach nach Anspruch 1, dadurch gekennzeichnet, daß der Deckelrahmen (4') zweiteilig ausgebildet ist, mit einem die Glasscheibe (2) des Glasdeckels (1') einfassenden und haltenden oberen Rahmenteil (22) und einem damit fest verbindbaren unteren Rahmenteil (23), welches für die mehrschichtige Verschlußplatte (10') eine ebene Auflagefläche (27) aufweist, die parallel und mit Abstand zur Unterfläche der Glasscheibe (2) bzw. der Sonnenblende (8') verläuft, wobei dieser Abstand etwa der Gesamtdicke der mehrschichtigen Verschlußplatte (10') entspricht.

3. Fahrzeugdach nach Anspruch 1 oder 2, dadurch gekennzeichnet, daß beim Verschließen oder Öffnen der Lichtdurchlässe (9') der Sonnenblende (8') die Verschlußplattenschichten (24, 25, 26) nacheinander verschiebbar sind, derart, daß zunächst eine der beiden äußeren Verschlußplattenschichten (24, 26) verschiebbar ist, nach einer Schiebewegstrecke von etwa der Breite der Verschlußabschnitte (12') die benachbarte Verschlußplattenschicht (25) mitgenommen wird, und ggf. weitere Verschlußplattenschichten in ihrer Schichtenreihenfolge nach jeweils entsprechenden Schiebewegstrecken mitgenommen werden, bis für die letzte Schiebewegstrecke von etwa der Breite der Verschlußabschnitte (12') auch die andere der beiden äußeren Verschlußplattenschichten mitgenommen wird.

4. Fahrzeugdach nach Anspruch 2 oder 3, dadurch gekennzeichnet, daß an einem vorderen Querteil (28) des unteren Deckelrahmenteils (23) eine Abtriebsvorrichtung (17) für die Verschiebung der Verschlußplattenschichten (24, 25, 26) in Fahrzeuglängsrichtung angebracht ist, bestehend aus einer drehbar aber axial unverschiebbar in einem Gehäuse (18') gelagerten und mit einem nach unten weisenden Handgriff (19) versehenen kreisrunden Antriebsscheibe (20), die an ihrer Oberseite einen exzentrisch angebrachten, nach oben vorstehenden Mitnehmerstift (21) trägt, welcher in quer zur Fahrzeuglängsrichtung in jeder Verschlußplattenschicht (24, 25, 26) angebrachte Schlitze (32, 33, 34) verschiebbar eingreift, deren Breite in den einzelnen Verschlußplattenschichten (24, 25, 26) nach Maßgabe des von Verschlußplattenschicht zu Verschlußplattenschicht nacheinander erfolgenden Mitnahmeeingriffs unterschiedlich und von einer der beiden äußeren Verschlußplattenschichten zu der anderen stufenweise zunehmend ist.

5. Fahrzeugdach nach einem der Ansprüche 2 bis 4, dadurch gekennzeichnet, daß die Lichtdurchlässe (9') in der Sonnenblende (8') vollständig von den Verschlußabschnitten (12') der Verschlußplattenschichten (24, 25, 26) freigegeben sind, wenn alle Verschlußplattenschichten (24, 25, 26) bis zum Anschlag an einem vorderen Querteil (29) des oberen Rahmenteils (22) angeschlagen sind, jedoch vollständig geschlossen sind, wenn alle Verschlußplattenschichten (24, 25, 26) bis zum Anschlag in eine Aufnahmenut (31) eines hinteren Querteils (30) des oberen Rahmenteils (22) eingeschoben sind.

## Claims

1. Vehicle roof comprising a glass lid (1'), which completely fills a roof opening in a closed position, is adjustable for at least partly exposing the opening and is provided with a sunshield (8') formed as an opaque coating of the lower face of the glass lid (1'), which sunshield possesses a series of uniformly spaced light apertures (9') and with which is associated a closure plate (10') constructed as a slider and bearing directly against it, which closure plate is slidably guided on a lid frame (4') parallel to the sunshield (8') and is equipped with closure portions (12') for optionally completely or partly closing or opening the light apertures (9') and openings (11') alternating therewith, which openings can be optionally completely or partly aligned with the corresponding light apertures (9') of the sunshield (8') by displacing the closure plate (10'), whereby the width of the openings (11') corresponds with the width of the light apertures (9') and the width of the closure portions (12') corresponds with the distance between the light apertures (9'), characterized in that the width of the light apertures (9') of the sunshield (8') is equal to a multiple of the width of the closure portions (12') of the closure plate (10'), and that the closure plate (10') consists of a number, corresponding to the aforementioned multiple, of individual, thin closure plate layers (24, 25, 26), which bear against one another without intermediate spaces and are displaceable relative to one another.

2. Vehicle roof according to Claim 1, characterized in that the lid frame (4') is constructed in two parts, comprising an upper frame part (22), enclosing and holding the glass pane (2) of the glass lid (1'), and a lower frame part (23) which can be firmly connected thereto, which lower frame part possesses a plane seating surface (27) for the multilayer closure plate (10'), which seating surface extends parallel to and at a distance from the lower face of the glass pane (2) respectively of the sunshield (8'), whereby this distance being approximately equal to the total thickness of the multilayer closure plate (10').

3. Vehicle roof according to Claim 1 or 2, characterized in that, in the closure or opening of the light passages (9') of the sunshield (8'), the closure plate layers (24, 25, 26) are slidable one after another in such a way that initially one of the two outer closure plate layers (24, 26) is slidable, after a sliding distance of approximately the width of the closure portions (12') the adjacent closure plate layer (25) is entrained, and any further closure plate payers are each entrained in their layer sequence by corresponding displacement distances, until for the last displacement distance of approximately the width of the closure portions (12'), the other of the two outer closure plate layers is also entrained.

4. Vehicle roof according to Claim 2 or 3, characterized in that, on the forward transverse component (28) of the lower lid frame part (23), a drive apparatus (17) for the displacement of the closure plate layers (24, 25, 26) in the longitudinal direction of the vehicle is mounted, this apparatus consisting of a circular drive disc (20), mounted rotatably but axially fixed in a housing (18') and provided with a downwardly pointing handle (19), which disc possesses, on its upper face, an eccentrically mounted, upwardly projecting entrainer pin (21), which slidably engages into slits (32, 33, 34) formed transversely to the vehicle longitudinal direction in each of the closure plate layers (24, 25, 26), the width of which slits varies, in the individual closure plate layers (24, 25, 26), according to the entrainer engagement that occurs successively from one closure plate layer to the next, and increases by steps from one of the two outer closure plate layers to the other.

5. Vehicle roof according to one of Claims 2 to 4, characterized in that the light apertures (9') in the sunshield (8') are fully exposed by the closure portions (12') of the closure plate layers (24, 25, 26) when all the closure plate layers (24, 25, 26) have been displaced fully home against the forward transverse component (29) of the upper frame part (22), but are fully closed when all the closure plate layers (24, 25, 26) have been displaced fully home into a seating groove (31) of the rear transverse component (30) of the upper frame part (22).

## Revendications

1. Toit de véhicule comportant un couvercle en verte (1') qui remplit en position de fermeture une ouverture du toit, qui est réglable pour dégager au moins partiellement ladite ouverture et qui est pourvu d'un pare-soleil (8') réalisé sous la forme d'enduit opaque de la surface inférieure du couvercle en verte (1'), qui présente au moins une rangée de passages de lumière (9') répartis à écartements réguliers et auquel est associée directement adjacente une plaque de fermeture (10') réalisée sous forme de coulisse qui est guidée sur un cadre du couvercle (4') de manière à pouvoir être déplacée parallèlement au pare-soleil (8') et qui est pourvue de tronçons de fermeture (12') pour sélectivement fermer ou ouvrir entièrement ou partiellement les passages de lumière (9') et d'ouvertures (11') qui alternent avec ceux-ci, lesquels tronçons de fermeture sont susceptibles d'être alignés sélectivement entièrement ou partiellement avec les passages de lumière (9') correspondants en déplaçant la plaque de fermeture (10'), la largeur des ouvertures (11') concordant avec la largeur des passages de lumière (9'), et la largeur des tronçons de fermeture (12') concordant avec l'écartement entre les passages de lumière (9'), caractérisé en ce que la largeur des passages de lumière (9') du pare-soleil (8') est un multiple de la largeur des tronçons de fermeture (12') de la plaque de fermeture (10'), et en ce que la plaque de fermeture (10') est constituée par un nombre de minces couches de plaque de fermeture (24, 25, 26) individuelles correspondant au multiple précité, qui reposent les unes sur les autres sans interstices et qui sont déplaçables les unes par rapport aux autres.

2. Toit de véhicule selon la revendication 1, caractérisé en ce que le cadre du couvercle (4') est réalisé en deux parties avec une partie de cadre supérieure (22) enserrant et retenant la vitre (2) du couvercle en verte (1') et une partie de cadre inférieure (23) susceptible d'y être reliée de manière solidaire, qui présente pour la plaque de fermeture (10') multicouche une surface d'appui (27) plane qui s'étend parallèlement et à écartement de la surface inférieure de la vitre (2) et du pare-soleil (8'), respectivement, cet écartement correspondant approximativement à l'épaisseur totale de la plaque de fermeture (10') multicouche.

3. Toit de véhicule selon l'une ou l'autre des revendications 1 et 2, caractérisé en ce que lorsqu'on ferme ou qu'on ouvre les passages de lumière (9') du pare-soleil (8'), les couches de plaque de fermeture (24, 25, 26) sont susceptibles d'être déplacées les unes après les autres de telle sorte que tout d'abord une des deux couches de plaque de fermeture (24, 26) extérieures est déplaçable, que la couche de plaque de fermeture (25) voisine est entraînée après un trajet de coulissement d'approximativement la largeur des tronçons de fermeture (12'), et que le cas échéant, d'autres couches de plaque de fermeture sont entraînées dans leur succession dans la couche après des trajets de coulissement respectifs correspondants jusqu'à ce que l'autre des deux couches de plaque de fermeture extérieures soit entraînée pour le dernier trajet de coulissement approximativement de la largeur des tronçons de fermeture (12').

4. Toit de véhicule selon l'une ou l'autre des revendications 2 et 3, caractérisé en ce que sur la partie transversale (28) inférieure de la partie de cadre inférieure (23) du couvercle est monté un dispositif d'entraînement (17) servant au déplacement des couches de plaque de fermeture (24, 25, 26) dans le sens longitudinal du véhicule, constitué par une poulie d'entraînement (20) circulaire rotative mais logée de manière axialement immobile dans un boîtier (18') et pourvue d'une poignée (19) dirigée vers le bas, portant sur sa partie supérieure une broche d'entraînement (21) montée excentrique et faisant saillie vers le haut, qui s'engage à déplacement dans des fentes (32, 33, 34) ménagées transversalement au sens longitudinal du véhicule dans chaque couche de plaque de fermeture (24, 25, 26), dont la largeur dans les couches de plaque de fermeture (24, 25, 26) individuelles augmente de manière différente et pas à pas depuis l'une des couches de plaque de fermeture extérieures vers l'autre, dans la mesure de l'engagement d'entraînement se produisant successivement de couche en couche de plaque de fermeture.

5. Toit de véhicule selon l'une quelconque des revendications 2 à 4, caractérisé en ce que les passages de lumière (9') dans le pare-soleil (8') sont entièrement dégagés par les tronçons de fermeture (12') des couches de plaque de fermeture (24, 25, 26) lorsque toutes les couches de plaque de fermeture (24, 25, 26) sont venues en butée sur une partie transversale (29) antérieure de la partie de cadre supérieure (22), mais qu'ils sont entièrement fermés lorsque toutes les couches de plaque de fermeture (24, 25, 26) sont enfilées jusqu'à la butée dans une rainure de réception (31) d'une partie transversale (30) postérieure de la partie de cadre supérieure (22).
